# EUROPEAN PATENT APPLICATION

(11) **EP 4 618 624 A1**
(43) Date of publication of application: **17.09.2025**
(21) Application number: 23902566.1
(22) Date of filing: 06.12.2023
(51) Int. Cl.: H04W 36/00

(54) **COMMUNICATION METHOD AND COMMUNICATION APPARATUS**

(30) Priority: 13.12.2022 CN 202211593152
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN)
(74) Representative: Pfenning, Meinig & Partner mbB
(86) International application number: PCT/CN2023/136913
(87) International publication number: WO 2024/125370

(57) **Abstract**

This application provides a communication method and a communication apparatus, to reduce power consumption of neighboring cell measurement performed by a terminal device in a handover process. **In** technical solutions provided in this application, a first network device obtains location information of a first terminal device and receives at least one measurement result from at least one terminal device, where the at least one measurement result includes location information of a corresponding terminal device and an indication indicating whether a signal of a first network is measured; and the first network device determines, based on the location information of the first terminal device and the at least one measurement result, that the first terminal device is located in a coverage area of the first network, and then configures the first terminal device to perform measurement on the signal of the first network. According to the method in this application, the first terminal device is not configured to perform measurement on an area that is not covered by a cell in the first network, to avoid unnecessary measurement power consumption of the first terminal device.

## Description

This application claims priority to Chinese Patent Application No. 202211593152.8, filed with the China National Intellectual Property Administration on December 13, 2022 and entitled "COMMUNICATION METHOD AND COMMUNICATION APPARATUS", which is incorporated herein by reference in its entirety.

### TECHNICAL FIELD

This application relates to the communication field, and in particular, to a communication method, a communication apparatus, a computer-readable storage medium, a computer program product, and a communication system.

### BACKGROUND

In a non-terrestrial network (non-terrestrial network, NTN), communication implemented by using a non-terrestrial network device is referred to as non-terrestrial network communication. An NTN system may include a satellite system. The NTN has advantages of wide coverage, long communication distance, high reliability, high flexibility, high throughput, and the like, and is not affected by a geographical environment, a climate condition, and a natural disaster. Therefore, the NTN has been widely applied in various fields. Introducing the NTN communication to mobile network communication, for example, 5th generation (5th Generation, 5G) communication, can improve user experience. The NTN can provide a communication service for an area that is difficult to be covered by a terrestrial network, such as an ocean, a forest, desert, or a remote area. In addition, the NTN can enhance reliability of mobile communication, for example, provide a more stable communication service for a user in a high-speed movement scenario such as a train or an airplane.

To obtain a better network service, a terminal device is handed over between an NTN system and a terrestrial network (terrestrial network, TN) system. For example, when TN coverage deteriorates, the terminal device is handed over to the NTN to obtain an uninterrupted network connection; or when the terminal device accesses the NTN but a location area of the terminal device is covered by the TN, the terminal device is handed over to the TN to obtain a shorter transmission delay and a larger transmission bandwidth. During preparation for handover, a source network device currently connected to the terminal device needs to configure the terminal device to perform neighboring cell measurement, to determine a target cell to which the terminal device is to be handed over. However, TN signal coverage or NTN signal coverage may be absent in an area where the terminal device is located. In this case, configuring, by the source network device, the terminal device to perform measurement in an area without corresponding network coverage causes a waste of energy of the terminal device.

### SUMMARY

This application provides a communication method, a communication apparatus, a computer-readable storage medium, a computer program product, and a communication system, to reduce power consumption of a terminal device.

According to a first aspect, this application provides a communication method, applied to a first network device. The method includes: obtaining a location of a first terminal device; determining that the first terminal device is located in a signal coverage area of a first network; and sending first information to the first terminal device, where the first terminal device is in a connected mode and the first terminal device accesses a second network through the first network device, and the first information indicates the first terminal device to perform signal measurement on a cell in the first network.

According to the communication method provided in this application, when determining that the location of the first terminal device is covered by the first network, the first network device indicates the first terminal device to perform measurement on the cell in the first network. The first terminal device does not perform invalid measurement without coverage of the first network, reducing measurement power consumption of the first terminal device. In addition, the first terminal device performs measurement on the cell in the first network when the first terminal device is covered by the first network, so that the first terminal device can obtain a more accurate measurement result, thereby improving a handover success rate of the first terminal device.

The first terminal device is a terminal device that currently needs to perform network handover, and the first network device is a network device connected to the first terminal device.

The first network is a target network to which the first terminal device is handed over, and the second network is a network currently accessed by the first terminal device.

In an example, when the first terminal device is handed over from an NTN to a TN, the first network device is a non-terrestrial network device currently connected to the first terminal device, the first network is the TN, and the second network is the NTN.

In another example, when the first terminal device is handed over from a TN to an NTN, the first network device is a terrestrial network device currently connected to the first terminal device, the first network is the NTN, and the second network is the TN.

In some possible implementations, the obtaining a location of a first terminal device may include: sending, to the first terminal device, request information for requesting the location of the first terminal device; and receiving response information from the first terminal device, where the response information indicates location information of the location of the first terminal device.

In some other possible implementations, the obtaining a location of a first terminal device may further include: The first network device obtains the location of the first terminal device through positioning.

In some possible implementations, the method further includes: receiving at least one measurement result from at least one terminal device, where the measurement result includes measurement location information and first indication information, the measurement location information indicates a location at which the at least one terminal device performs cell signal measurement, and the first indication information indicates that the at least one terminal device measures a signal of the first network; and the determining that the first terminal device is located in a signal coverage area of the first network includes: determining, based on the at least one measurement result and the location of the first terminal device, that the first terminal device is located in the signal coverage area of the first network.

In this implementation, the first network device may determine, based on the at least one measurement result, that each of the at least one terminal device measures the first network, and may learn of a location at which each of the at least one terminal device performs the cell signal measurement. On this basis, the first network device may determine that the location at which the at least one terminal device performs measurement is covered by the first network.

Further, the determining, based on the at least one measurement result and the location of the first terminal device, that the first terminal device is located in the signal coverage area of the first network includes: determining, when a distance between the location of the first terminal device and the location at which the at least one terminal device performs measurement is less than or equal to a first threshold, that the first terminal device is located in the signal coverage area of the first network.

The first threshold is for determining whether two terminal devices are in a same network coverage area. For example, if a distance between the two terminal devices is less than the first threshold, it is considered that the two terminal devices are in same network coverage; otherwise, it is considered that the two terminal devices are in different network coverage.

Optionally, the method further includes: determining, when the distance between the location of the first terminal device and the location at which the at least one terminal device performs measurement is greater than the first threshold, that the first terminal device is not located in the signal coverage area of the first network.

In some possible implementations, the at least one measurement result is obtained through measurement when the at least one terminal device is in a non-connected mode.

A network coverage status at a measurement location of the at least one terminal device may be obtained based on the measurement result of the at least one terminal device in the non-connected mode. In a handover scenario, the information may be used to determine whether the location of the first terminal device is covered by a corresponding network, thereby avoiding invalid measurement.

In some possible implementations, the at least one terminal device may not include the first terminal device.

In this implementation, when a distance between a location at which the first terminal device performs measurement in the non-connected mode and a location at which the first terminal device performs measurement in the connected mode is long, the first network device may determine, based on a measurement result of another terminal device, whether the location at which the first terminal device performs measurement in the connected mode is covered by the first network. This can avoid redundancy of a measurement result of the first terminal device, and reduce power consumption of the first network device.

In some other possible implementations, the at least one terminal device may include the first terminal device.

In this implementation, the first network device may determine, based on a measurement result of the first terminal device and/or another terminal device in the non-connected mode, whether the location of the first terminal device is covered by the first network. For example, if a terminal device #A measures the signal of the first network, and a distance between a location of the terminal device #A and a location at which the first terminal device performs measurement in the connected mode is less than or equal to the first threshold, it is determined that the current location of the first terminal device is covered by the first network.

In this implementation, the first network device may receive a plurality of measurement results. This can avoid a case in which the location of the first terminal device is covered by the first network but the coverage cannot be detected by the first network device based on measurement results due to the excessively small quantity of measurement results, to obtain an accurate measurement result, and improve a handover success rate of the first terminal device.

In some other possible implementations, the at least one terminal device may alternatively include only the first terminal device.

In this implementation, the first network device may determine, based on a measurement result of the first terminal device in the non-connected mode, whether the location of the first terminal device is covered by the first network. For example, if the first terminal device measures a cell signal of the first network when performing measurement in the non-connected mode, and a distance between a location at which the first terminal device performs the non-connected-mode measurement and a location at which the first terminal device is in the connected mode is short (for example, less than or equal to the first threshold), it is determined that the location at which the first terminal device is in the connected mode is covered by the first network.

In this implementation, when the distance between the location at which the first terminal device performs measurement in the non-connected mode and the location at which the first terminal device performs measurement in the connected mode is short, the first network device may determine, based only on a measurement result of the first terminal device, whether the location at which the first terminal device performs measurement in the connected mode is covered by the first network. This can avoid redundancy of the measurement result, and reduce power consumption of the first network device.

Optionally, the first network device may also determine, without obtaining location information of the first terminal device, whether the first terminal device is currently in a coverage area of the first network.

In some possible implementations, the method further includes: separately sending second indication information to the at least one terminal device, where the second indication information indicates the terminal device to report the measurement result.

Optionally, before the first network device separately sends the second indication information to the at least one terminal device, the first network device or another network device may further separately send fourth indication information to the at least one terminal device, where the fourth indication information indicates the terminal device to perform the non-connected-mode measurement on the first network when the terminal device is in the non-connected mode, and the fourth indication information may further indicate measurement configuration information used by the terminal device to perform measurement when the terminal device is in the non-connected mode.

Optionally, the first network device or the another network device may further separately send fifth indication information to the at least one terminal device, where the fifth indication information indicates measurement configuration information used by the terminal device to perform measurement when the terminal device is in the non-connected mode.

Optionally, the first network device separately sends sixth indication information to the at least one terminal device, where the sixth indication information indicates the terminal device to report whether a measurement result of the terminal device in the non-connected mode is available or indicates the terminal device to report whether there is a measurement result in the non-connected mode.

Optionally, after receiving the sixth indication information, the at least one terminal device may separately send seventh indication information to the first network device, where the seventh indication information indicates that the measurement result of the terminal device in the non-connected mode is available or indicates that the terminal device has a measurement result in the non-connected mode.

In some possible implementations, an interval between generation time of the measurement result and reporting time of the measurement result is within preset duration, to avoid an invalid measurement result caused because a location of the at least one terminal device changes apparently due to an excessively long time interval between measurement time and the reporting time.

In some possible implementations, the measurement result further includes at least one of the following information: a frequency of the measured cell and an identifier of the measured cell.

In some possible implementations, the first network device may configure, based on the frequency of the cell or the identifier of the cell, the first terminal device to perform neighboring cell measurement, so that the first terminal device performs measurement only on a cell corresponding to the frequency or the identifier of the cell, to reduce measurement power consumption.

In some possible implementations, when the first network is a non-terrestrial network NTN, and the second network is a terrestrial network TN, the method further includes: receiving ephemeris information of at least one second network device from the at least one terminal device, where the second network device belongs to the first network; and the determining that the first terminal device is located in a signal coverage area of a first network includes: determining, based on the ephemeris information and the location of the first terminal device, that the first terminal device is located in the signal coverage area of the first network.

In this implementation, the second network device is configured to access the NTN for the terminal device. For example, the second network device may be a satellite.

In this implementation, when the first terminal device is handed over from the TN to the NTN, the first network device may further determine, based on the ephemeris information and the location information of the first terminal device, that the first terminal device is located in the signal coverage area of the first network, and then configure the first terminal device to perform measurement on the cell in the first network, so that the first terminal device does not perform invalid measurement without coverage of the first network, reducing measurement power consumption of the first terminal device.

In some possible implementations, when the first terminal device performs related measurement in the non-connected mode, the first terminal device may alternatively determine, based on the ephemeris information and the location of the first terminal device, whether to perform the neighboring cell measurement. For example, when performing related measurement for cell reselection, the first terminal device performs measurement only on a cell covered by the first network, so that the first terminal device does not perform invalid measurement without coverage of the first network, to reduce measurement power consumption of the first terminal device.

In some possible implementations, the determining, based on the ephemeris information and the location of the first terminal device, that the first terminal device is located in the signal coverage area of the first network includes: determining, when a distance between the location of the first terminal device and the location of the second network device is less than or equal to a second threshold, that the first terminal device is located in the signal coverage area of the first network.

The second threshold is for determining whether the first terminal device is in a network coverage area of the second network device.

Optionally, the method further includes: determining, when a distance between the location of the first terminal device and the location of the second network device is greater than a second threshold, that the first terminal device is not located in the signal coverage area of the first network.

In some possible implementations, the first network device sends third indication information to the at least one terminal device, where the third indication information indicates the at least one terminal device to report the ephemeris information.

In some possible implementations, the at least one terminal device may not include the first terminal device.

In some other possible implementations, the at least one terminal device may include the first terminal device.

In some other possible implementations, the at least one terminal device may include only the first terminal device.

In the first aspect, when the first terminal device is handed over from the NTN to the TN, the first network device determines, based on the at least one measurement result, whether the location of the first terminal device is covered by the TN, and when it is determined that the first terminal device is covered by the TN, indicates the first terminal device to perform signal measurement on a cell in the TN. In this way, the first terminal device does not perform invalid measurement without coverage of the TN, reducing measurement power consumption of the first terminal device.

In addition, when the first terminal device is handed over from the TN to the NTN, the first network device determines, based on at least one measurement result or the ephemeris information, whether the location of the first terminal device is covered by the NTN, and when it is determined that the first terminal device is covered by the NTN, indicates the first terminal device to perform signal measurement on a cell in the NTN. In this way, the first terminal device does not perform invalid measurement without coverage of the NTN, reducing measurement power consumption of the first terminal device.

According to a second aspect, this application provides an apparatus. The apparatus may include function modules configured to implement the method in the first aspect. For example, the apparatus includes an obtaining module, a determining module, and a sending module. For effects that can be obtained by the apparatus, refer to the descriptions in the first aspect. Details are not described herein again.

The obtaining module may be configured to obtain a location of a first terminal device.

The determining module may be configured to determine that the first terminal device is located in a signal coverage area of a first network.

The sending module may be configured to send first information to the first terminal device, where the first terminal device is in a connected mode and the first terminal device accesses a second network through the first network device, and the first information indicates the first terminal device to perform signal measurement on a cell in the first network.

Optionally, the apparatus may further include a receiving module. The receiving module may be configured to receive at least one measurement result from at least one terminal device, where the at least one measurement result separately includes measurement location information and first indication information, the measurement location information indicates a location at which the at least one terminal device performs cell signal measurement, and the first indication information indicates that the at least one terminal device measures a signal of the first network.

Correspondingly, the determining module is further configured to determine, based on the at least one measurement result and the location of the first terminal device, that the first terminal device is located in the signal coverage area of the first network.

Optionally, the determining module is further configured to determine, when a distance between the location of the first terminal device and the location at which the at least one terminal device performs measurement is less than or equal to a first threshold, that the first terminal device is located in the signal coverage area of the first network.

Optionally, the sending module is further configured to separately send second indication information to the at least one terminal device, where the second indication information indicates to report the measurement result.

Optionally, the receiving module is further configured to receive ephemeris information of at least one second network device from the at least one terminal device, where the second network device belongs to the first network, and the ephemeris information indicates a location of the second network device.

Correspondingly, the determining module is further configured to determine, based on the ephemeris information and the location of the first terminal device, that the first terminal device is located in the signal coverage area of the first network.

Optionally, the determining module is further configured to determine, when a distance between a location of the first terminal device and the location of the second network device is less than or equal to a second threshold, that the first terminal device is located in the signal coverage area of the first network.

Optionally, the sending module is further configured to send, by the first network device, third indication information to the at least one terminal device, where the third indication information indicates the at least one terminal device to report the ephemeris information.

In some implementations, these modules may be implemented by using software and/or hardware. For example, the determining module may be implemented by a processor by executing program code stored in a memory, and the obtaining module, the sending module, and the receiving module may be implemented by a transceiver. In this implementation, the apparatus may include the processor and the transceiver, and optionally, may further include the memory.

It may be understood that the communication apparatus provided in the second aspect may alternatively be a chip system.

According to a third aspect, this application provides a computer-readable storage medium. The computer-readable medium stores program code executed by a communication apparatus, and the program code includes instructions for implementing the method in the first aspect.

According to a fourth aspect, this application provides a computer program product including instructions. When the computer program product runs on a communication apparatus, the communication apparatus is enabled to implement the method in the first aspect.

According to a fifth aspect, this application provides a communication system. The communication system may include a communication apparatus configured to perform the method in the first aspect.

In some implementations, the communication system further includes a terminal device, and the terminal device is configured to receive first information.

It may be understood that, for effects that can be obtained in the second aspect, the third aspect, the fourth aspect, and the fifth aspect, refer to the descriptions in the first aspect. Details are not described herein again.

### BRIEF DESCRIPTION OF DRAWINGS

FIG. 1 is a diagram of an architecture of a communication system to which an embodiment of this application is applied;
FIG. 2 is a diagram of an architecture of a radio access network device according to an embodiment of this application;
FIG. 3 is a schematic flowchart of a communication method according to an embodiment of this application;
FIG. 4 is a schematic flowchart of a communication method used when a first terminal device is handed over from an NTN to a TN according to an embodiment of this application;
FIG. 5 is a schematic flowchart of a communication method used when a first terminal device is handed over from a TN to an NTN according to an embodiment of this application;
FIG. 6 is a schematic flowchart of a communication method used when a first terminal device is handed over from a TN to an NTN according to another embodiment of this application;
FIG. 7 is a schematic flowchart of a communication method according to another embodiment of this application;
FIG. 8 is a diagram of a structure of a communication apparatus according to an embodiment of this application;
FIG. 9 is a diagram of a structure of a communication apparatus according to another embodiment of this application; and
FIG. 10 is a diagram of a structure of a communication apparatus according to still another embodiment of this application.

### DESCRIPTION OF EMBODIMENTS

The following describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that have basically the same functions and purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

A communication method in embodiments of this application may be applied to various communication systems, for example, a long term evolution (long term evolution, LTE) system, a worldwide interoperability for microwave access (worldwide interoperability for microwave access, WiMAX) system, a 5th generation (5th generation, 5G) system such as a new radio (new radio, NR) communication system, and a future communication system such as a 6th generation (6th generation, 6G) system.

To facilitate understanding of the communication method provided in embodiments of this application, the following describes a system architecture and an application scenario of the communication method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

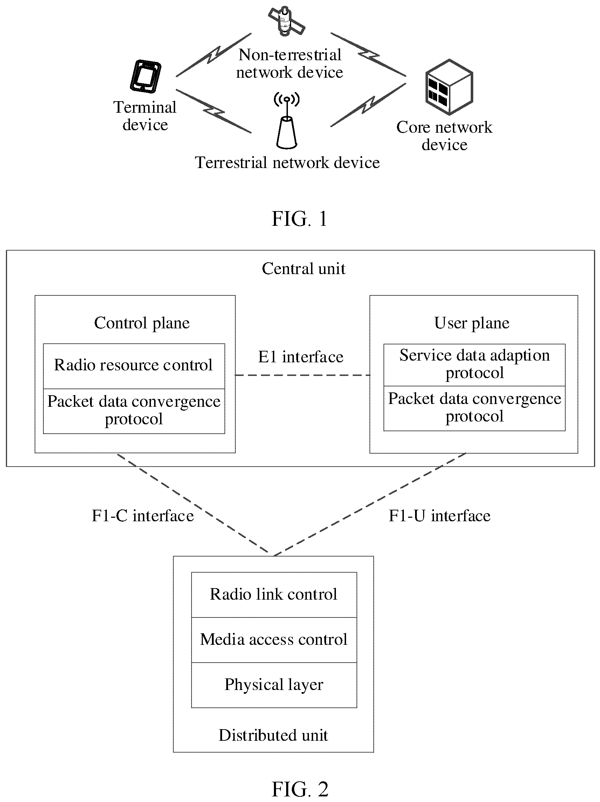

FIG. 1 is a diagram of an architecture of a communication system to which an embodiment of this application is applied. As shown in FIG. 1, the communication system includes a terminal device, a terrestrial network device, a non-terrestrial network device, and a core network device.

For example, the terminal device may be connected to the core network device through the terrestrial network device, and the terrestrial network device is configured to connect the terminal device to a TN. For example, the terrestrial network device includes a terrestrial base station.

For example, the terminal device may be further connected to the core network device through the non-terrestrial network device, and the non-terrestrial network device is configured to connect the terminal device to an NTN. In an example, the non-terrestrial network device may include a satellite. In another example, the non-terrestrial network device may alternatively include a satellite and a terrestrial device that provides an NTN service for the terminal device through the satellite.

A specific technology and a specific device form that are used by the satellite are not limited in embodiments of this application. For example, the satellite may include a geostationary orbit (geosynchronous earth orbit, GEO) satellite, a medium earth orbit (medium earth orbit, MEO) satellite, and a low earth orbit (low earth orbit, LEO) satellite based on a satellite altitude, that is, a satellite orbit altitude. The GEO is a synchronous earth satellite orbit, and satellites operating in this orbit are stationary relative to the ground. The LEO and MEO are collectively referred to as a non-geostationary orbit (NGSO). Satellites operating in such orbit move at a high speed relative to the ground. The NGSO can be further classified into an earth moving cell (earth moving cell) and an earth fixed cell (earth fixed cell) depending on whether a beam of the satellite moves with the satellite. For the earth moving cell, the cell moves relative to the ground, and a beam direction of the satellite moves with the satellite. For the earth fixed cell, the cell is fixed relative to the ground within a period of time. A satellite antenna may use a beamforming capability of the satellite antenna to point the beam to a fixed area on the ground within a period of time.

For another example, based on a working mode, the satellite may include a transparent forwarding form and a regeneration form, which are respectively applicable to a transparent forwarding network architecture and a regeneration forwarding network architecture. In the transparent forwarding network architecture, the satellite may be used as a relay satellite, and is configured to forward information from a cell in the terrestrial network device (for example, a base station). A function of the satellite is radio frequency filtering, frequency conversion, and frequency amplification. To be specific, the satellite mainly serves as a physical layer relay to regenerate a physical layer signal, and does not have another higher protocol layer. In the regeneration forwarding network architecture, the satellite has a processing function of a base station, including a regeneration satellite with an inter satellite link (inter satellite link, ISL), a regeneration satellite without the ISL, and a regeneration satellite with a DU processing function of the base station. Information transmission and exchange may be implemented between regeneration satellites with ISLs through the ISL. For example, the ISL may be a radio interface, for example, an Xn interface. There is no ISL between regeneration satellites without the ISLs. In other words, satellites cannot interact with each other through the interface. The regeneration satellite with a DU processing function of the base station may serve as a DU node.

In addition, the non-terrestrial network device in this application may further include an air network device in a high-altitude platform station (high-altitude platform station, HAPS) communication system. The air network device is, for example, a network device deployed in an air device such as a hot air balloon, an airship, or an uncrewed aerial vehicle.

The terminal device may also be referred to as a terminal, user equipment (user equipment, UE), a mobile station (mobile station, MS), a mobile terminal (mobile terminal, MT), or the like, and may be an entity on a user side configured to receive or transmit a signal, for example, a mobile phone. The terminal device includes a handheld device, a vehicle-mounted device, a wearable device, or a computing device with a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D) communication, vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like.

In this embodiment of this application, an apparatus configured to implement a function of the terminal may be the terminal, or may be an apparatus that can support the terminal in implementing the function, for example, a chip system, a communication module, or a modem. The apparatus may be installed in the terminal. In this embodiment of this application, the chip system may include a chip, or may include a chip and another discrete component. In the technical solutions provided in embodiments of this application, the technical solutions provided in embodiments of this application are described by using an example in which the apparatus for implementing a terminal function is a terminal and the terminal is UE. A specific technology and a specific device form that are used by the terminal device are not limited in embodiments of this application.

In this application, the terrestrial network device and the non-terrestrial network device may be collectively referred to as an access network device, or referred to as a radio access network (radio access network, RAN) device. The radio access network device may be a device with a wireless transceiver function. The radio access network device may be a device that provides a wireless communication function service, and is usually located on a network side. The radio access network device includes but is not limited to a next generation base station (gNodeB, gNB) in a 5G communication system, a next generation base station in a 6G mobile communication system, a base station in another future mobile communication system, an access node in a Wi-Fi system, or the like, and a base station device such as an evolved node B (evolved node B, eNB) in a long term evolution (long term evolution, LTE) system. The RAN device may alternatively be a home base station (for example, a home evolved NodeB, or a home Node B, HNB), a baseband unit (base band unit, BBU), a transmission reception point (transmission reception point, TRP), a transmission point (transmitting point, TP), or the like.

In a network structure, the RAN device may include a central unit (central unit, CU) node and a distributed unit (distributed unit, DU) node, or may be a RAN device including a CU node and a DU node, or a RAN device including a control plane CU node, a user plane CU node, and a DU node. For example, in FIG. 2, the RAN device including the CU node and the DU node splits a gNB protocol layer in an NR system, functions of some protocol layers are centrally controlled by the CU, and functions of remaining or all protocol layers are distributed in the DU. The CU centrally controls the DU. Further, the central unit CU may be further divided into a control plane (CU-CP) and a user plane (CU-UP). The CU-CP is responsible for a function of the control plane, and mainly includes radio resource control (radio resource control, RRC) and a packet data convergence protocol (packet data convergence protocol, PDCP) corresponding to the control plane, that is, PDCP-C. The PDCP-C is mainly responsible for data encryption/decryption, integrity protection, data transmission, and the like of the control plane. The CU-UP is responsible for a function of the user plane, and mainly includes a service data adaptation protocol (service data adaption protocol, SDAP) and a PDCP corresponding to the user plane, that is, a PDCP-U. The SDAP is mainly responsible for processing data of a core network and mapping a flow (a data flow) to a bearer. The PDCP-U is mainly responsible for data plane encryption and decryption, integrity protection, header compression, sequence number maintenance, data transmission, and the like. The CU-CP is connected to the CU-UP through an E1 interface. On behalf of the gNB, the CU-CP is connected to the core network through an NG interface, and is connected to the DU through an F1 interface-control plane, that is, F1-C. The CU-UP is connected to the DU through an F1 interface-user plane, that is, F1-U. Certainly, in another possible implementation, the PDCP-C is alternatively in the CU-UP.

The RAN device provides a service for a cell. The terminal device communicates with a base station by using a transmission resource (for example, a frequency domain resource or a spectrum resource) used by the cell. The cell may be a cell corresponding to the base station (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-rate data transmission service. The RAN device may be a macro base station, or may be a micro base station or an indoor base station, or may be a relay node or a donor node, a device that provides a wireless communication service for user equipment in a V2X communication system, a radio controller in a cloud radio access network (cloud radio access network, CRAN) scenario, a relay station, a vehicle-mounted device, a wearable device, a network device in a future evolved network, or the like. The RAN device in this embodiment may alternatively be an open-radio access network (open-radio access network, O-RAN) device, and the O-RAN device may include an open-distributed unit (open-distributed unit, O-DU) and an open-central unit (open-central unit, O-CU).

The core network device is a device in a core network (core network, CN) that provides service support for the terminal device. Currently, examples of some core network devices are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of a terminal. The SMF entity may be responsible for session management, for example, user session establishment. The UPF entity may be a functional entity of the user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element, an SMF functional entity, or the like.

It may be understood that FIG. 1 is merely a simple example of the communication system. During actual application, there is at least one terminal device, one terrestrial network device, one non-terrestrial network device, and one core network device.

It may be understood that the communication system may include more components than those shown in FIG. 1. For example, the communication system may further include an interface, and the interface may be an interface configured to implement communication between the terminal device, the RAN device, and the core network device. In some embodiments, the interface may include a wire for coupling a wired connection, or a pin for coupling a wireless transceiver, or a chip and/or a pin for a wireless connection. In some embodiments, the interface may include a transmitter, a receiver, a transceiver, and/or an antenna. The interface may be configured to use any available protocol (such as a 3GPP standard).

In the communication system, a terminal device in a connected mode may be handed over between the NTN and the TN.

In a possible application scenario, when the terminal device moves to desert, a forest, an ocean, or a remote area, or the terminal device is on a vehicle moving at a high speed, such as a train, an airplane, or a high-speed railway, it is difficult to cover a network in a conventional terrestrial base station manner due to a cost or physical condition limitation. In this case, the terminal device may be handed over from the TN to the NTN, to meet a communication requirement of the terminal device.

In another possible application scenario, when the terminal device accesses the NTN, but a location area of the terminal device is covered by the TN, because the terminal device is far away from a non-terrestrial network, a communication delay is large, and the terminal device may be handed over from the NTN to the TN, to reduce the communication delay.

When a terminal device in a connected mode performs network handover, a source network device currently connected to the terminal device needs to configure the terminal device to perform neighboring cell measurement, to determine a target cell to which the terminal device is to be handed over.

In an example, when the terminal device is handed over from the NTN to the TN, the source network device is the non-terrestrial network device, for example, a satellite. In another example, when the terminal device is handed over from the TN to the NTN, the source network device is the terrestrial network device.

However, TN signal coverage or NTN signal coverage may be absent in an area where the terminal device is located. In this case, configuring, by the source network device, the terminal device to perform measurement in an area without corresponding network coverage causes a waste of energy of the terminal device.

In view of this, this application provides a communication method, to resolve a problem that measurement power consumption of a terminal device is high in a conventional technology.

The technical solutions of this application are applicable to an NTN architecture such as a transparent forwarding network architecture and a regeneration forwarding network architecture. In addition, the technical solutions of this application are applicable to an earth moving cell, and are also be applicable to an earth fixed cell.

According to the technical solutions of this application, a source network device may first determine whether a location of the terminal device is covered by a first network, and when it is determined that the location of the terminal device is covered by the first network, indicate the terminal device to perform measurement on a cell in the first network, where the first network is a target network to which the terminal device hands over. The terminal device does not perform invalid measurement without coverage of the first network, reducing measurement power consumption of the terminal device. In addition, the terminal device performs measurement on the cell in the first network when the terminal device is covered by the first network, so that the terminal device can obtain a more accurate measurement result, thereby improving a handover success rate of the terminal device.

When determining whether the location of the terminal device is covered by the first network, the source network device may perform determining based on a measurement result of the terminal device in a non-connected mode.

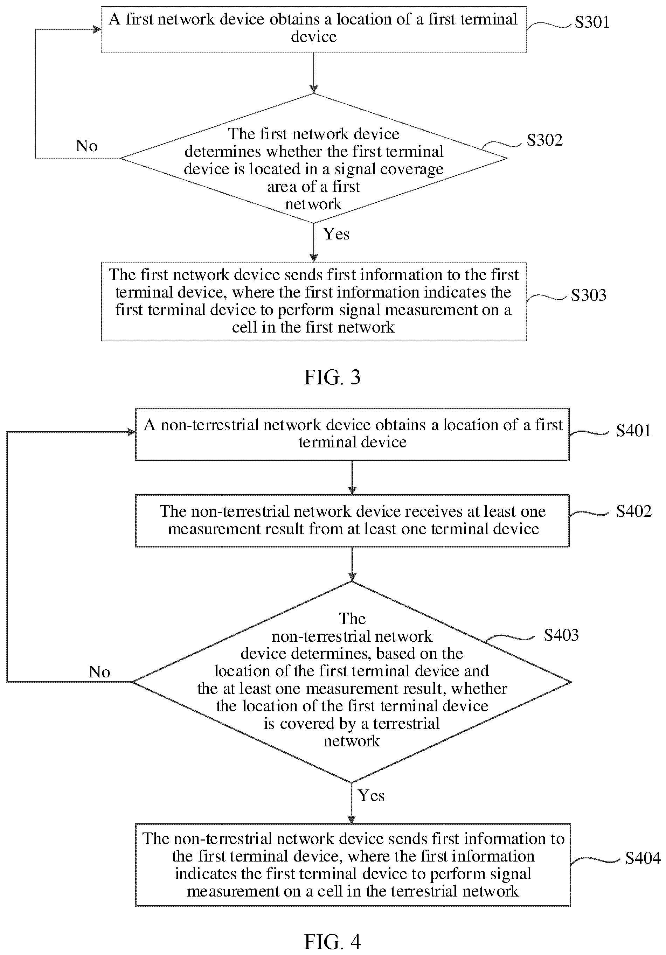

FIG. 3 is a schematic flowchart of a communication method according to an embodiment of this application. As shown in FIG. 3, the communication method includes S301, S302, and S303. The following describes the communication method provided in this application from a perspective of interaction between a network device and a terminal device. It may be understood that an execution body of the method is not limited in this application. For example, the execution body may alternatively be a component used in the network device or the terminal device, or an apparatus having some functions of the network device or the terminal device. For example, an access network device may alternatively be a chip, a chip system, or a processor that supports the network device or the terminal device in implementing the method, alternatively, the execution body may be a logical module or software that can implement all or some functions of the network device or the terminal device.

S301: A first network device obtains a location of a first terminal device.

In an example, in this embodiment, the first terminal device may be the terminal device shown in the system architecture shown in FIG. 1, and the first network device may be the RAN device in the system architecture shown in FIG. 1. The first terminal device is in a connected mode, and the first terminal device accesses a network through the first network device. For example, the first terminal device performs a handover process from a second network to a first network.

In an example, when the first terminal device is handed over from an NTN to a TN, the first network device is a non-terrestrial network device currently connected to the first terminal device or a terrestrial network device that provides an NTN service for the first terminal device, and a network currently accessed by the first terminal device is the NTN. The first network is the TN, and the second network is the NTN.

In another example, when the first terminal device is handed over from a TN to an NTN, the first network device is a terrestrial network device currently connected to the first terminal device and that provides a TN service for the first terminal device, and a network currently accessed by the first terminal device is the TN. The first network is the NTN, and the second network is the TN.

For example, the non-terrestrial network device may be a satellite device, and the terrestrial network device may be a terrestrial base station.

In this embodiment, the first network device may obtain the location of the first terminal device from the first terminal device.

In an implementation, the first network device sends request information to the first terminal device, where the request information is used to request the first terminal device to report location information. Correspondingly, the first terminal device receives the request information. Then, the first terminal device sends response information to the first network device, where the response information indicates the location of the first terminal device. Correspondingly, the first network device receives the response information, and determines the location of the first terminal device based on the response information.

In an implementation, the first network device may obtain the location of the first terminal device through positioning. For example, the first terminal device may send a positioning reference signal to the first network device. After receiving the positioning reference signal, the first network device may record feature information of the positioning reference signal, and determine the location of the first terminal device based on a feature parameter of the positioning reference signal. It may be understood that the foregoing is merely an example in which the first network device obtains the location of the first terminal device, and does not limit a method for obtaining the location of the first terminal device by the first network device.

S302: The first network device determines whether the first terminal device is located in a signal coverage area of the first network.

If the first network device determines that the first terminal device is located in the signal coverage area of the first network, S303 is performed.

In an implementation, if the first network device determines that the first terminal device is not in the signal coverage area of the first network, S301 may be performed. Specifically, if the first network device determines that the first terminal device is not in the signal coverage area of the first network, the first network device may determine temporarily not to indicate the first terminal device to perform signal measurement. Further, after a period of time, for example, after a preset period of time, or when the first terminal device is to perform a handover process from the first network to the second network again, S301 and S302 may be performed again, and the first network device obtains a latest location of the first terminal device and determines whether the first terminal device is located in the signal coverage area of the first network. Due to mobility of the first terminal device, the location of the first terminal device may change after a period of time, and S301 and S302 are performed again. When it is determined, based on the latest location of the first terminal device, that the first terminal device is located in the signal coverage area of the first network, S303 is performed. In this way, reducing power consumption of the terminal device and obtaining an accurate signal measurement result can be balanced.

In this embodiment, the first network device may receive at least one measurement result from at least one terminal device. Correspondingly, the first network device may determine, based on the at least one measurement result and the location of the first terminal device, whether the first terminal device is located in the signal coverage area of the first network.

For example, the first network device may obtain signal coverage statuses of the first network at different locations based on the at least one measurement result of the at least one terminal device. Further, the first network device may determine whether a current location of the first terminal device is located in an area covered by the first network, or determine whether the location of the first terminal device is covered by a signal of the first network.

In an example, in this embodiment, the at least one measurement result is a measurement result obtained when the at least one terminal device performs measurement in a non-connected mode. The non-connected mode described in this application includes a radio resource control idle mode (RRC_IDLE) and/or a radio resource control inactive mode (RRC _INACTIVE). The at least one measurement result includes measurement location information and first indication information. The measurement location information indicates a location or a location area in which the at least one terminal device performs measurement, and the first indication information indicates that the at least one terminal device measures, when the at least one terminal device performs measurement (for example, at the location or the location area corresponding to the measurement location information), a signal status of the first network. The signal status of the first network may include at least one of the following: cell signal quality of the first network, or a cell signal of the first network is not measured, or a cell signal of the first network is measured. Optionally, when reporting the measurement result, the at least one terminal device may obtain one measurement result by combining measurement results obtained through measurement performed in a period of time. For example, a signal status of the first network in one location area is obtained based on signal statuses of the first network that are obtained through measurement performed at a plurality of locations.

In an implementation, a method for determining, by the first network device based on the at least one measurement result and the location of the first terminal device, whether the first terminal device is located in the signal coverage area of the first network may include: obtaining, based on the at least one measurement result, a signal coverage status of the first network at the location at which the at least one terminal device performs measurement; and determining whether a distance between the location of the first terminal device and the location at which the at least one terminal device performs measurement is less than or equal to a first threshold. If a distance between a location at which a terminal device #A in the at least one terminal device performs measurement and the location of the first terminal device is less than or equal to the first threshold, and the terminal device #A measures a signal of the first network, it is determined that the first terminal device is located in the signal coverage area of the first network; otherwise, it is determined that the first terminal device is not in the signal coverage area of the first network. The first threshold may be a preset value. For example, the first threshold may be 20 meters.

In this implementation, the at least one terminal device may not include the first terminal device. When a measurement result of the first terminal device in the non-connected mode is unavailable, the first network device may determine, based on a measurement result of another terminal in the non-connected mode, whether a current location of the first terminal device is covered by the first network, so that the first terminal device does not perform invalid measurement without coverage of the first network, and measurement power consumption of the first terminal device is reduced.

In another implementation, the at least one terminal device may include the first terminal device and a terminal device other than the first terminal device. The first network device may determine, based on the measurement result of the at least one terminal device in the non-connected mode, whether the location of the first terminal device is covered by the first network. For example, if the terminal device #A measures a cell signal of the first network when the terminal device #A is in the non-connected mode, and the distance between the location at which the terminal device #A performs measurement in the non-connected mode and the location of the first terminal device is less than or equal to the first threshold, it indicates that the location of the first terminal device is covered by the first network. Otherwise, it indicates that the location of the first terminal device is not covered by the first network.

In this implementation, the first network device may receive a plurality of measurement results. This can avoid a case in which the location of the first terminal device is covered by the first network but the coverage cannot be detected by the first network device based on measurement results due to the excessively small quantity of measurement results, to obtain an accurate measurement result, and improve a handover success rate of the first terminal device.

In another implementation, the at least one terminal device may include only the first terminal device. In this way, the first network device may determine, based on the measurement result of the first terminal device in the non-connected mode, whether the current location of the first terminal device is covered by the first network. For example, if the first terminal device measures the cell signal of the first network when performing measurement in the non-connected mode, and a distance between the location at which the first terminal device performs measurement in the non-connected mode and a location at which the first terminal device performs measurement in a connected mode is less than or equal to the first threshold, it indicates that the location at which the first terminal device is in the connected mode is covered by the first network. Otherwise, it indicates that the location at which the first terminal device is in the connected mode is not covered by the first network.

In this implementation, when the first network device does not store a measurement result of another terminal device in a non-connected mode, the first network device may determine, based on the measurement result of the first terminal device in the non-connected mode, whether the location at which the first terminal device is in the connected mode is covered by the first network, so that the first terminal device does not perform invalid measurement without coverage of the first network, to reduce measurement power consumption of the first terminal device.

It should be noted that, in some possible implementations, S301 may not alternatively be performed in the method. In other words, the first network device may also determine, without obtaining location information of the first terminal device, whether the first terminal device is currently in a coverage area of the first network.

For example, the first network device determines, based on the measurement result of the first terminal device in the non-connected mode, whether the first terminal device is located in the coverage area of the first network.

In an implementation, if a time interval between a moment at which the first terminal device performs measurement in the non-connected mode and a current moment is less than a third threshold, and the first terminal device measures the signal of the first network, it indicates that the first terminal device is currently in the coverage area of the first network.

The third threshold may be a preset value. For example, the third threshold may be 10 minutes.

In another implementation, if the measurement result reported by the first terminal device to the first network device indicates that the first terminal device measures the signal of the first network, it indicates that the first terminal device is currently in the coverage area of the first network, otherwise, the first terminal device is not currently in the coverage area of the first network. In this implementation, the first terminal device reports only a measurement result in a preset time period. For example, the first terminal device first determines whether a time interval between the moment at which the first terminal device performs measurement in the non-connected mode and a moment at which the first terminal device reports the measurement result is less than a fourth threshold. If the time interval between the moment at which the first terminal device performs measurement in the non-connected mode and the moment at which the first terminal device reports the measurement result is less than the fourth threshold, the first terminal device reports the measurement result, otherwise, the first terminal device does not report the measurement result. The fourth threshold may be a preset value. For example, the fourth threshold may be 10 minutes.

For another example, when the first terminal device is in the non-connected mode and periodically performs measurement based on a periodicity, the first terminal device reports a latest or most recent measurement result when reporting the measurement result.

For example, the first network device may also determine, based on a measurement result of a terminal device in a non-connected mode other than the first terminal device, whether the first terminal device is located in the coverage area of the first network. A method for determining, by the first network device based on a measurement result of another terminal device in a non-connected mode, whether the first terminal device is located in the coverage area of the first network is consistent with a method for determining, by the first network device based on the measurement result of the first terminal device in the non-connected mode, whether the first terminal device is located in the coverage area of the first network. Details are not described herein again.

In this embodiment, before receiving the at least one measurement result from the at least one terminal device, the first network device may further separately send second indication information to the at least one terminal device, where the second indication information indicates the terminal device to report the measurement result of the terminal device in the non-connected mode.

Before the first network device separately sends the second indication information to the at least one terminal device, the first network device or another network device may further separately send fourth indication information to the at least one terminal device, where the fourth indication information indicates the terminal device to perform measurement on the first network when the terminal device is in the non-connected mode. Optionally, the fourth indication information may further indicate measurement configuration information used by the terminal device to perform measurement when the terminal device is in the non-connected mode. Optionally, the first network device or the another network device that sends the fourth indication information is a device that belongs to the second network. It should be noted that the fourth indication information is measurement information configured for enabling the terminal device to report a measurement result obtained by performing measurement in the non-connected mode. Optionally, before the first network device or the another network device separately sends the fourth indication information to the at least one terminal device, the first network device or the another network device obtains whether the terminal device supports performing measurement on the first network when the terminal device is in the non-connected mode.

For example, the fourth indication information may be carried in a radio resource control release (radio resource control release, RRC Release) message. To be specific, before the at least one terminal device enters the non-connected mode, the first network device or the another network device separately sends the fourth indication information to the at least one terminal device.

For example, the measurement configuration information may include related configurations such as a measurement frequency, a subcarrier spacing, measurement duration, a valid measurement area list, and measurement reporting. After receiving the fourth indication information and entering the non-connected mode, the terminal device starts measurement. The valid measurement area list indicates a measurement area. The terminal device performs measurement on the first network in the non-connected mode only when the terminal device is in the measurement area. The measurement reporting means that the terminal device reports configuration information of the measurement result, for example, reported signal quality (for example, reference signal received power or reference signal received quality) and a reporting threshold. The reporting threshold means that the terminal device reports the measurement result only when a value of the signal quality exceeds the threshold.

Optionally, the first network device or the another network device may further separately send fifth indication information to the at least one terminal device, where the fifth indication information indicates measurement configuration information used by the terminal device to perform measurement when the terminal device is in the non-connected mode. The fifth indication information may be carried in a system information block (system information block, SIB). For example, the configuration information may include related configurations such as a measurement frequency, a subcarrier spacing, a measurement cell list, and measurement reporting.

Optionally, the first network device or the another network device may further separately send sixth indication information to the at least one terminal device, where the sixth indication information indicates whether the terminal device performs measurement when the terminal device camps on a cell corresponding to the first network device or the another network device. The sixth indication information and the fifth indication information may be separately sent in a same SIB, or may be sent in different SIBs.

For example, if the sixth indication information indicates the terminal device to perform measurement when the terminal device camps on the cell corresponding to the first network device or the another network device, the terminal device may perform measurement based on the measurement configuration information and store the measurement result.

Optionally, when the fourth indication information does not carry the measurement configuration information, the terminal device may perform measurement based on the corresponding configuration information included in the fifth indication information. For example, if the fourth indication information does not carry the measurement frequency, the terminal device may perform measurement based on frequency information carried in the fifth indication information.

Optionally, the first network device separately sends seventh indication information to the at least one terminal device, where the seventh indication information indicates the terminal device to report whether the measurement result of the terminal device in the non-connected mode is available or indicates the terminal device to report whether there is a measurement result in the non-connected mode. For example, the seventh indication information may be carried in the SIB.

After receiving the seventh indication information, the terminal device sends eighth indication information to the first network device, where the eighth indication information indicates that the measurement result of the terminal device in the non-connected mode is available or indicates that the terminal device has a measurement result in the non-connected mode. For example, the eighth indication information may be carried in a radio resource control complete (RRC Configuration Complete) message.

After receiving the eighth indication information, the first network device may separately send the second indication information to the at least one terminal device to request the terminal device to report the measurement result of the terminal device in the non-connected mode.

It should be noted that a process from configuring, by the first network device, the terminal device to perform measurement in the non-connected mode to obtaining the measurement result by the first network device may be implemented as an independent embodiment.

In an implementation, a time interval between generation time and reporting time of each of the at least one measurement result obtained by the first network device is within preset duration. In other words, after obtaining the measurement result, the at least one terminal device reports the measurement result within the preset duration, to avoid an invalid measurement result caused because a location of the at least one terminal device changes apparently due to an excessively long time interval between measurement time and the reporting time. For example, time at which the first terminal device generates the measurement result when the first terminal device is in the non-connected mode is T0, a current moment is T1, and the preset duration is DT. If a difference between T0 and T1 is less than DT, the measurement result is reported.

For example, each of the at least one measurement result may further include at least one of the following information: a frequency of the measured cell, an identifier of the measured cell, and measurement execution time. Optionally, the first network device may configure, based on the frequency of the cell or the identifier of the cell in the measurement result, the first terminal device to perform neighboring cell (that is, the cell in the first network) measurement, so that the first terminal device performs measurement only on a cell corresponding to the frequency or the identifier of the cell, to reduce measurement power consumption.

In another example, in this embodiment, the at least one measurement result is a measurement result obtained when the at least one terminal device performs measurement in a radio resource control connected mode (RRC_CONNECTED). In this way, the first network device may store the at least one measurement result. If the first terminal device subsequently has a measurement requirement, the first network device may determine, based on the at least one measurement result, whether the first terminal device performs the signal measurement. The radio resource control connected mode may also be referred to as the connected mode.

In an implementation, the first network device may send, to a third network device, the collected measurement result of the at least one terminal device or the coverage area of the first network that is obtained by the first network device based on the measurement result of the at least one terminal device. The third network device may be a network device that provides a service for the first terminal device. For example, if the first network device is a satellite device, the third network device is a new satellite device that is to replace the first network device.

After obtaining the measurement result, the third network device may configure, with reference to the measurement result, the terminal device to perform connected-mode measurement, or after obtaining the coverage area of the first network, the third network device configures, based on a current location of the terminal device in the connected mode, the terminal device to perform connected-mode measurement. When a terminal device accessed by the third network device has a neighboring cell measurement requirement, the third network device determines, based on the obtained measurement result and a location of the terminal device accessed by the third network device, whether the terminal device needs to perform measurement on a neighboring cell that belongs to the first network, to avoid invalid measurement. That the terminal device performs the connected-mode measurement means that the terminal device performs measurement in the connected mode. Similarly, that the terminal device performs non-connected-mode measurement means that the terminal device performs measurement in the non-connected mode.

In another implementation, when the first terminal device is handed over from the TN to the NTN, the first network device may further determine, based on ephemeris information, whether the location of the first terminal device is covered by the first network.

For example, the first network device may receive ephemeris information of a second network device from the at least one terminal device, and the second network device belongs to the first network. Correspondingly, the first network device may determine, based on the ephemeris information and the location of the first terminal device, whether the first terminal device is located in the signal coverage area of the first network. The second network device is configured to access the NTN for the terminal device. For example, the second network device may be a satellite or a terrestrial network device that provides an NTN service through a satellite. The at least one terminal device may include the first terminal device or may not include the first terminal device. Optionally, the at least one terminal device may alternatively include only the first terminal device.

For example, the second network device may broadcast the ephemeris information in a system message, and the at least one terminal device may receive the ephemeris information. The ephemeris information may indicate a location and a movement parameter of the second network device, and the movement parameter may include a movement speed. For example, the ephemeris information may be included in a system information block (system information block, SIB) 19 message.

Because the ephemeris information may indicate the location of the second network device, the first network device may deduce the location of the second network device based on the ephemeris information. In an implementation, a method for determining, by the first network device based on the ephemeris information and the location of the first terminal device, whether the first terminal device is located in the signal coverage area of the first network may include: determining whether a distance between the location of the first terminal device and the location of the second network device is less than or equal to a second threshold. If the distance between the location of the first terminal device and the location of the second network device is less than or equal to the second threshold, the first terminal device is located in the signal coverage area of the first network. If the distance between the location of the first terminal device and the location of the second network device is greater than the second threshold, the first terminal device is not located in the signal coverage area of the first network.

For example, first, the first network device determines a location of the second network device at a second moment based on a location of the second network device at a first moment and the movement parameter of the second network device, where the second moment is a moment at which the first terminal device performs the connected-mode measurement, and the first moment is a corresponding moment at which the at least one terminal device obtains the ephemeris information; and then determines whether the distance between the location of the first terminal device and the location of the second network device at the second moment is less than or equal to the second threshold. If the distance is less than or equal to the second threshold, it is determined that the first terminal device is in the signal coverage area of the first network. The second threshold may be a preset value. For example, the first threshold may be 20000 meters.

For example, the first network device may send third indication information to the at least one terminal device, where the third indication information indicates the at least one terminal device to report the ephemeris information. Correspondingly, the at least one terminal device may report the ephemeris information based on the third indication information.

S303: The first network device sends first information to the first terminal device, where the first information indicates the first terminal device to perform signal measurement on a cell in the first network.

After receiving the first information, the first terminal device may perform the signal measurement on the cell in the first network, to obtain a measurement result, and then report the measurement result to the first network device, so that the first network device determines a target cell based on the measurement result. For example, the first information further includes a frequency of the cell in the first network, a cell identifier, measurement execution time, and the like.

In the technical solutions of this application, when determining that the location of the first terminal device is covered by the first network, the first network device indicates the first terminal device to perform measurement on the cell in the first network, so that the first terminal device does not perform invalid measurement without coverage of the first network, reducing measurement power consumption of the first terminal device.

In the following, this application further describes the communication method provided in this application with reference to two handover scenarios of the first terminal device. It may be understood that embodiments provided in this application may be mutually referenced and cited. For example, content described in the embodiment shown in FIG. 3 is not described again.

When the first terminal device currently accesses the NTN and the first terminal device is handed over to the TN, the communication method may be shown in FIG. 4. In this handover scenario, an example in which the first network device is the non-terrestrial network device is used for description.

S401: The non-terrestrial network device obtains a location of the first terminal device.

For specific descriptions, refer to the descriptions in S301.

S402: The non-terrestrial network device receives at least one measurement result from at least one terminal device.

For example, the at least one measurement result may include a historical measurement result of the at least one terminal device that is received and stored by the non-terrestrial network device.

For example, the at least one measurement result is a measurement result obtained when the at least one terminal device performs terrestrial cell signal measurement in a non-connected mode. The at least one measurement result includes measurement location information and first indication information. The measurement location information indicates a location at which the at least one terminal device performs the terrestrial cell signal measurement, and the first indication information indicates that the at least one terminal device measures a signal status of the TN. The signal status of the TN may include at least one of the following: cell signal quality of the TN, and a cell signal of the TN is not measured.

For example, each of the at least one measurement result may further include at least one of the following information: a frequency of a measured terrestrial cell, an identifier of the measured terrestrial cell, and measurement execution time.

For a method for receiving, by the non-terrestrial network device, the at least one measurement result from the at least one terminal device, refer to the method for receiving, by the first network device, the at least one measurement result from the at least one terminal device in S302.

In an implementation, the non-terrestrial network device may further send, to a third network device, the collected measurement result of the at least one terminal device or a coverage area of the TN that is obtained by the non-terrestrial network device based on the measurement result of the at least one terminal device. The third network device may be a network device that provides a service for the first terminal device. For example, if the non-terrestrial network device is a satellite, the third network device is a new satellite that is to replace the non-terrestrial network device.

After obtaining the measurement result, the third network device configures, with reference to the measurement result, the terminal device to perform connected-mode measurement, or after obtaining the coverage area of the TN, the third network device configures, based on a current location of the terminal device in the connected mode, the terminal device to perform the connected-mode measurement. When the terminal device accessed by the third network device has a TN neighboring cell measurement requirement, the third network device determines, based on the obtained measurement result and the location of the terminal device accessed by the third network device, whether the terminal device needs to perform neighboring cell measurement, to avoid invalid measurement.

S403: The non-terrestrial network device determines, based on the location of the first terminal device and the at least one measurement result, whether the location of the first terminal device is covered by the TN. If the non-terrestrial network device determines that the location of the first terminal device is covered by the TN, S404 is performed.

If the non-terrestrial network device determines that the location of the first terminal device is not covered by the TN, S401 may be performed again.

For a method for determining, by the non-terrestrial network device based on the location of the first terminal device and the at least one measurement result, whether the location of the first terminal device is covered by the TN, refer to related content in S302.

It should be noted that the non-terrestrial network device may also determine, without obtaining location information of the first terminal device, whether the first terminal device is currently in a coverage area of the TN.

For example, the non-terrestrial network device determines, based on the measurement result of the first terminal device in the non-connected mode, whether the location of the first terminal device is covered by the TN.

For a method for determining, by the non-terrestrial network device based on the measurement result of the first terminal device in the non-connected mode, whether the location of the first terminal device is covered by the TN, refer to related content in S302.

Optionally, the non-terrestrial network device may further determine, based on a measurement result of another terminal device in a non-connected mode, whether the location of the first terminal device is covered by the TN.

For a method for determining, by the non-terrestrial network device based on the measurement result of the another terminal device in the non-connected mode, whether the location of the first terminal device is covered by the TN, also refer to related content in S302.

S404: The non-terrestrial network device sends first information to the first terminal device, where the first information indicates the first terminal device to perform signal measurement on a cell in the TN.

In this embodiment, after receiving the first information, the first terminal device performs the signal measurement on the cell in the TN, to obtain the measurement result, and then reports the measurement result to the non-terrestrial network device, so that the non-terrestrial network device determines a target cell based on the measurement result.

In this embodiment, when determining that the first terminal device is covered by the TN, the non-terrestrial network device indicates the first terminal device to perform the signal measurement on the cell in the TN. In this way, the first terminal device does not perform invalid measurement without coverage of the TN, reducing measurement power consumption of the first terminal device.

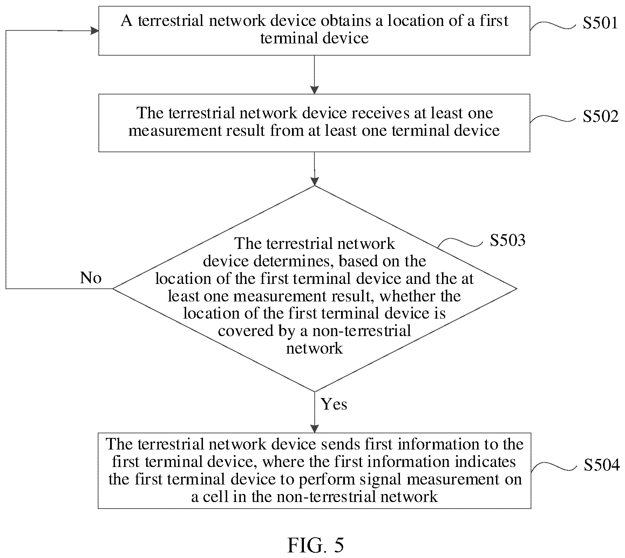

When the first terminal device currently accesses the TN and the first terminal device is handed over to the NTN, the communication method may be shown in FIG. 5. In this handover scenario, an example in which the first network device is the terrestrial network device is used for description.

S501: The terrestrial network device obtains a location of the first terminal device.

For a method for obtaining the location of the first terminal device by the terrestrial network device, refer to S301. Details are not described herein again.

S502: The terrestrial network device receives at least one measurement result from at least one terminal device.

For example, the at least one measurement result may be a historical measurement result of the at least one terminal device that is received and stored by the terrestrial network device.

For example, the at least one measurement result is a measurement result obtained when the at least one terminal device performs non-terrestrial cell signal measurement in a non-connected mode. The at least one measurement result includes measurement location information and first indication information. The measurement location information indicates a location at which the at least one terminal device performs the non-terrestrial cell signal measurement, and the first indication information indicates that the at least one terminal device measures a signal status of the NTN. The signal status of the NTN may include at least one of the following: cell signal quality of the NTN, and a cell signal of the NTN is not measured.

For example, each of the at least one measurement result may further include at least one of the following information: a frequency of a measured non-terrestrial cell, an identifier of the measured non-terrestrial cell, and measurement execution time.

For a method for receiving, by the terrestrial network device, the at least one measurement result from the at least one terminal device, refer to related content in S302.

In an implementation, the terrestrial network device may send, to a third network device, the collected measurement result of the at least one terminal device or a coverage area of the NTN that is obtained by the terrestrial network device based on the measurement result of the at least one terminal device. The third network device may be a network device that provides a service for the first terminal device. For example, if the terrestrial network device is a terrestrial base station, the third network device is a new terrestrial base station that is to replace the terrestrial network device.

After obtaining the measurement result, the third network device configures, with reference to the measurement result, the terminal device to perform connected-mode measurement, or after obtaining the coverage area of the NTN, the third network device configures, based on a current location of the terminal device in a connected mode, the terminal device to perform the connected-mode measurement. When a terminal device accessed by the third network device has an NTN neighboring cell measurement requirement, the third network device determines, based on the obtained measurement result and a location of the terminal device accessed by the third network device, whether the terminal device needs to perform measurement on a neighboring cell that belongs to the NTN, to avoid invalid measurement.

S503: The terrestrial network device determines, based on the location of the first terminal device and the at least one measurement result, whether the location of the first terminal device is covered by the NTN. If the terrestrial network device determines that the location of the first terminal device is covered by the NTN, S504 is performed.

If the terrestrial network device determines that the location of the first terminal device is not covered by the NTN, S501 may be performed again.

For a method for determining, by the terrestrial network device based on the location of the first terminal device and the at least one measurement result, whether the location of the first terminal device is covered by the NTN, refer to related content in S302. It should be noted that a terrestrial network base station may also determine, without obtaining location information of the first terminal device, whether the first terminal device is currently in a coverage area of the NTN.

For example, the terrestrial network device determines, based on the measurement result of the first terminal device in the non-connected mode, whether the location of the first terminal device is covered by the NTN.

For a method for determining, by the terrestrial network device based on the measurement result of the first terminal device in the non-connected mode, whether the location of the first terminal device is covered by the NTN, refer to related content in S302.

Optionally, the terrestrial network device may further determine, based on a measurement result of another terminal device in a non-connected mode, whether the location of the first terminal device is covered by the NTN.

For a method for determining, by the terrestrial network device based on the measurement result of the another terminal device in the non-connected mode, whether the location of the first terminal device is covered by the NTN, refer to related content in S302.

S504: The terrestrial network device sends first information to the first terminal device, where the first information indicates the first terminal device to perform signal measurement on a cell in the NTN.

After receiving the first information, the first terminal device performs the signal measurement on the cell in the NTN, to obtain a measurement result, and then reports the measurement result to the terrestrial network device, so that the terrestrial network device determines a target cell based on the measurement result.

In this embodiment, when determining that the first terminal device is covered by the NTN, the terrestrial network device indicates the first terminal device to perform the signal measurement on the cell in the NTN. In this way, the first terminal device does not perform invalid measurement without coverage of the NTN, reducing measurement power consumption of the first terminal device.

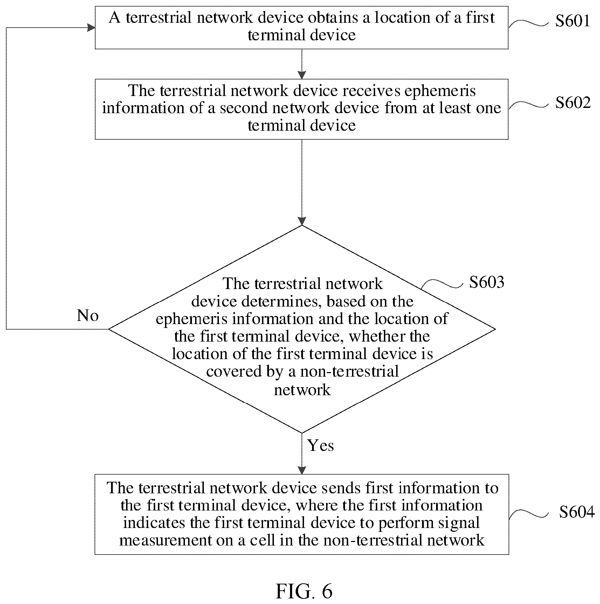

When the first terminal device currently accesses the TN and the first terminal device is handed over to the NTN, the first network device may not only determine, based on the at least one measurement result, whether the first terminal device is covered by the NTN, but also determine, based on ephemeris information, whether the first terminal device is covered by the NTN. A communication method used when the first network device determines, based on the ephemeris information, whether the first terminal device is covered by the NTN may be shown in FIG. 6. In this handover scenario, an example in which the first network device is the terrestrial network device is used for description.

S601: The terrestrial network device obtains a location of the first terminal device.

In this embodiment, for a method for obtaining the first terminal device by the terrestrial network device, refer to S301. Details are not described herein again.

S602: The terrestrial network device receives ephemeris information of a second network device from at least one terminal device.

The second network device may be the non-terrestrial network device shown in FIG. 1. The at least one terminal device includes the first terminal device or does not include the first terminal device. The at least one terminal device may include only the first terminal device.

For example, the second network device may broadcast the ephemeris information in a system message, and the at least one terminal device may receive the ephemeris information. The ephemeris information may indicate a location and a movement parameter of the second network device, and the movement parameter may include a movement speed. For example, the ephemeris information may be included in a SIB 19 message.

For example, before receiving the ephemeris information from the at least one terminal device, the terrestrial network device may further send third indication information to the at least one terminal device, where the third indication information indicates the at least one terminal device to report the ephemeris information. Correspondingly, the at least one terminal device may report the ephemeris information based on the third indication information.

S603: The terrestrial network device determines, based on the ephemeris information and the location of the first terminal device, whether the location of the first terminal device is covered by the NTN. If the terrestrial network device determines that the location of the first terminal device is covered by the NTN, S604 is performed.

If the terrestrial network device determines that the location of the first terminal device is not covered by the NTN, S601 may be performed again.

In this embodiment, for a method for determining, by the terrestrial network device based on the ephemeris information and the location of the first terminal device, whether the location of the first terminal device is covered by the NTN, refer to related content in S302.

S604: The terrestrial network device sends first information to the first terminal device, where the first information indicates the first terminal device to perform signal measurement on a cell in the NTN.

After receiving the first information, the first terminal device performs the signal measurement on the cell in the NTN, to obtain a measurement result, and then reports the measurement result to the terrestrial network device, so that the terrestrial network device determines a target cell based on the measurement result.

In this embodiment, when determining that the first terminal device is covered by the NTN, the terrestrial network device indicates the first terminal device to perform the signal measurement on the cell in the NTN. In this way, the first terminal device does not perform invalid measurement without coverage of the NTN, reducing measurement power consumption of the first terminal device.

Optionally, when the first terminal device performs related measurement in a non-connected mode, the non-terrestrial network device may also determine, based on the ephemeris information and the location of the first terminal device, whether the location of the first terminal device is covered by the NTN, to avoid measurement in an area not covered by the NTN, and reduce measurement power consumption of the terminal.

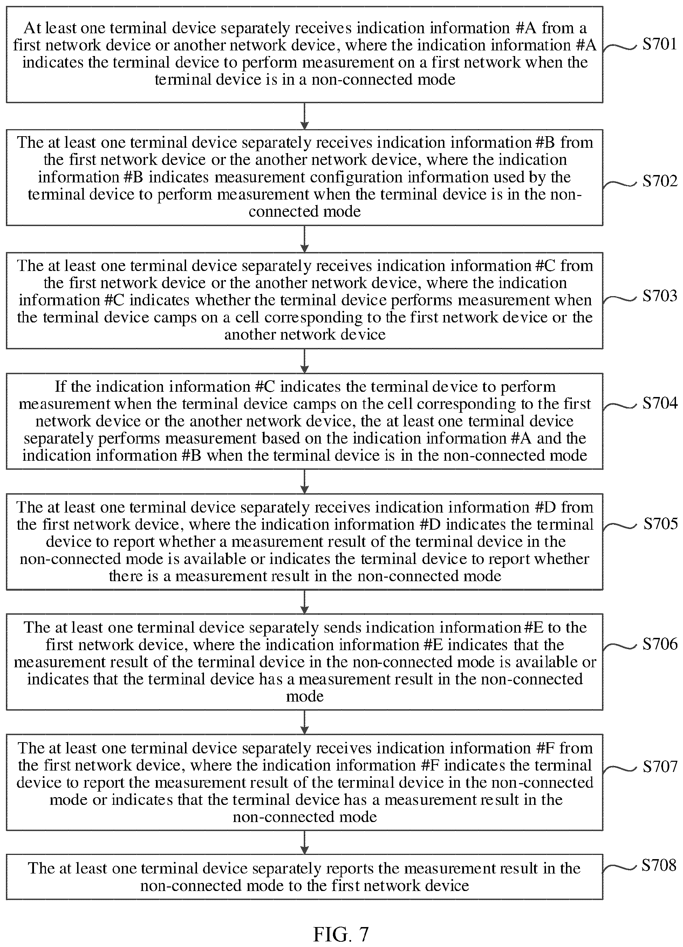

In the following, this application further describes the communication method in this application from a perspective of a terminal device. FIG. 7 is a diagram of a communication method according to an embodiment of this application. As shown in FIG. 7, the communication method may include S701 to S708.

S701: At least one terminal device separately receives indication information #A from a first network device or another network device, where the indication information #A indicates the terminal device to perform measurement on a first network when the terminal device is in a non-connected mode.

Optionally, the indication information #A may further indicate measurement configuration information used by the terminal device to perform measurement when the terminal device is in the non-connected mode.

S702: The at least one terminal device separately receives indication information #B from the first network device or the another network device, where the indication information #B indicates the measurement configuration information used by the terminal device to perform measurement when the terminal device is in the non-connected mode.

S703: The at least one terminal device separately receives indication information #C from the first network device or the another network device, where the indication information #C indicates whether the terminal device performs measurement when the terminal device camps on a cell corresponding to the first network device or the another network device.

S704: If the indication information #C indicates the terminal device to perform measurement when the terminal device camps on the cell corresponding to the first network device or the another network device, the at least one terminal device separately performs measurement based on the indication information #A and the indication information #B when the terminal device is in the non-connected mode.

Optionally, for measurement configuration information not carried in the indication information #A, the terminal device may perform measurement based on corresponding configuration information included in the indication information #B. For example, if the indication information #A does not carry a measurement frequency, the terminal device may perform measurement based on frequency information carried in the indication information #B.

After obtaining a measurement result, the terminal device may store the measurement result of the terminal device in the non-connected mode.

S705: The at least one terminal device separately receives indication information #D from the first network device, where the indication information #D indicates the terminal device to report whether the measurement result of the terminal device in the non-connected mode is available or indicates the terminal device to report whether there is a measurement result in the non-connected mode.

S706: The at least one terminal device separately sends indication information #E to the first network device, where the indication information #E indicates that the measurement result of the terminal device in the non-connected mode is available or indicates that the terminal device has a measurement result in the non-connected mode.

S707: The at least one terminal device separately receives indication information #F from the first network device, where the indication information #F indicates the terminal device to report the measurement result of the terminal device in the non-connected mode or indicates that the terminal device has a measurement result in the non-connected mode.

S708: The at least one terminal device separately reports the measurement result in the non-connected mode to the first network device.

After receiving the measurement result from the at least one terminal device, the first network device may determine, based on the measurement result of the at least one terminal device, whether a location of the first terminal device is covered by the first network. In this embodiment, for information carried in and transmission manners of the indication information #A, the indication information #B, the indication information #C, the indication information #D, the indication information #E, and the indication information #F, refer to related content in S302. For example, for the indication information #A, refer to the fourth indication information described in S302, for the indication information #B, refer to the fifth indication information described in S302, and for the indication information #C, refer to the sixth indication information described in S302, for the indication information #D, refer to the seventh indication information described in S302, for the indication information #E, refer to the eighth indication information described in S302, and for the indication information #F, refer to the second indication information described in S302.

In some possible implementations, the communication method shown in FIG. 7 may not include S702. In this way, the at least one terminal device may perform measurement based only on the fourth indication information when the terminal device is in the non-connected mode.

In some possible implementations, the communication method shown in FIG. 7 may not include S703. In this way, after receiving the indication information #A and/or the indication information #B, the at least one terminal device directly performs measurement based on the measurement configuration information in the indication information #A and/or the indication information #B.

In some possible implementations, the communication method shown in FIG. 7 may not include S705 and S706. In this way, the at least one terminal device receives the indication information #F, and if the measurement result is available, reports the measurement result to the first network device based on the indication information #F.

In some possible implementations, the communication method shown in FIG. 7 may include only S707 and S708. For example, when the first terminal device in the non-connected mode and periodically performs measurement based on a periodicity, if the first terminal device does not move or a moving distance is less than a predetermined threshold after a most recent measurement result is obtained, the first terminal device may directly report the most recent measurement result. In this way, redundancy of the measurement result can be avoided, and measurement power consumption of the first terminal device can be reduced.

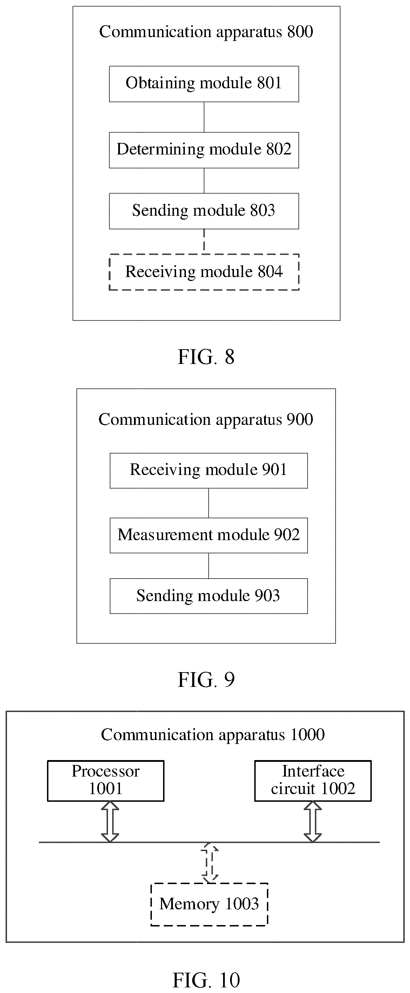

FIG. 8 is a diagram of a structure of a communication apparatus according to an embodiment of this application. As shown in FIG. 8, the apparatus 800 includes an obtaining module 801, a determining module 802, and a sending module 803.

In a first example, the communication apparatus 800 may be configured to implement the communication method in the embodiment shown in FIG. 3. For example, the obtaining module 801 may be configured to perform S301, the determining module 802 may be configured to perform S302, and the sending module 803 may be configured to perform S303.

Optionally, the communication apparatus 800 may further include a receiving module 804.

In a second example, the communication apparatus 800 may be further configured to implement the communication method in the embodiment shown in FIG. 4. For example, the obtaining module 801 may be configured to perform S401, the receiving module 804 may be configured to perform S402, the determining module 802 may be configured to perform S403, and the sending module 803 may be configured to perform S404.

In a third example, the communication apparatus 800 may be configured to implement the communication method in the embodiment shown in FIG. 5. For example, the obtaining module 801 may be configured to perform S501, the receiving module 804 may be configured to perform S502, the determining module 802 may be configured to perform S503, and the sending module 803 may be configured to perform S504.

In a fourth example, the communication apparatus 800 may be configured to implement the communication method in the embodiment shown in FIG. 6. For example, the obtaining module 801 may be configured to perform S601, the receiving module 804 may be configured to perform S602, the determining module 802 may be configured to perform S603, and the sending module 803 may be configured to perform S604.

FIG. 9 is a diagram of a structure of a communication apparatus according to another embodiment of this application. As shown in FIG. 9, the communication apparatus 900 includes a receiving module 901, a measurement module 902, and a sending module 903.

In an example, the communication apparatus 900 may be configured to implement the communication method in the embodiment shown in FIG. 7. For example, the receiving module 901 may be configured to perform S701, S702, S703, S705, and S707, the measurement module 902 is configured to perform S704, and the sending module 903 may be configured to perform S706 and S708.

FIG. 10 is a diagram of a structure of a communication apparatus according to still another embodiment of this application. As shown in FIG. 10, the communication apparatus 1000 includes a processor 1001 and an interface circuit 1002. The processor 1001 is coupled to the interface circuit 1002. It may be understood that the interface circuit 1002 may be a transceiver or an input/output interface. Optionally, the communication apparatus 1000 may further include a memory 1003, configured to store instructions executed by the processor 1001, or store input data required by the processor 1001 to run instructions, or store data generated after the processor 1001 runs instructions.

In an example, the processor 1001 is configured to implement a function of the determining module 802, and the interface circuit 1002 is configured to implement functions of the obtaining module 801, the determining module 802, and the receiving module 804.

In another example, the processor 1001 is configured to implement a function of the measurement module 902, and the interface circuit 1002 is configured to implement functions of the receiving module 901 and the sending module 903.

The communication apparatus 1000 may be a communication device, or may be a chip used in a communication device.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

In the technical solutions of this application, a communication system may be further provided. The communication system includes a network device and a terminal device, and the network device may communicate with the terminal device.

For example, when determining that the terminal device is covered by a first network, the network device may send first information to the terminal device, where the first information indicates the terminal device to perform signal measurement on a cell in the first network. Correspondingly, the terminal device may receive the first information, and perform the signal measurement on the cell in the first network based on the first information.

It may be understood that, in the communication system, there may be at least one network device and at least one terminal device.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in the ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or a part of embodiments may be implemented in the form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applied to a first network device, and the method comprises:
obtaining a location of a first terminal device;
determining that the first terminal device is located in a signal coverage area of a first network; and
sending first information to the first terminal device, wherein the first terminal device is in a connected mode and the first terminal device accesses a second network through the first network device, and the first information indicates the first terminal device to perform signal measurement on a cell in the first network.

2. The method according to claim 1, wherein the method further comprises: receiving at least one measurement result from at least one terminal device, wherein the at least one measurement result separately comprises measurement location information and first indication information, the measurement location information indicates a location at which the at least one terminal device performs cell signal measurement, and the first indication information indicates that the at least one terminal device measures a signal of the first network; and
the determining that the first terminal device is located in a signal coverage area of a first network comprises:
determining, based on the at least one measurement result and the location of the first terminal device, that the first terminal device is located in the signal coverage area of the first network.

3. The method according to claim 2, wherein the determining, based on the at least one measurement result and the location of the first terminal device, that the first terminal device is located in the signal coverage area of the first network comprises:
determining, when a distance between the location of the first terminal device and the location at which the at least one terminal device performs measurement is less than or equal to a first threshold, that the first terminal device is located in the signal coverage area of the first network.

4. The method according to claim 3, wherein the at least one terminal device comprises the first terminal device.

5. The method according to any one of claims 2 to 4, wherein the at least one measurement result is obtained through measurement when the at least one terminal device is in a non-connected mode.

6. The method according to any one of claims 2 to 5, wherein the method further comprises:
separately sending second indication information to the at least one terminal device, wherein the second indication information indicates to report the measurement result.

7. The method according to any one of claims 2 to 6, wherein a time interval between generation time of the measurement result and reporting time of the measurement result is within preset duration.

8. The method according to any one of claims 2 to 7, wherein the measurement result further comprises at least one of the following information: a frequency of the measured cell and an identifier of the measured cell.

9. The method according to any one of claims 1 to 8, wherein the first network is a non-terrestrial network NTN, and the second network is a terrestrial network TN.

10. The method according to any one of claims 1 to 8, wherein the first network is a TN, and the second network is an NTN.

11. The method according to claim 2, wherein when the first network is a non-terrestrial network NTN, and the second network is a terrestrial network TN, the method further comprises:
receiving ephemeris information of at least one second network device from the at least one terminal device, wherein the second network device belongs to the first network, and the ephemeris information indicates a location of the second network device; and
the determining that the first terminal device is located in a signal coverage area of a first network comprises:
determining, based on the ephemeris information and the location of the first terminal device, that the first terminal device is located in the signal coverage area of the first network.

12. The method according to claim 11, wherein the determining, based on the ephemeris information and the location of the first terminal device, that the first terminal device is located in the signal coverage area of the first network comprises:
determining, when a distance between the location of the first terminal device and the location of the second network device is less than or equal to a second threshold, that the first terminal device is located in the signal coverage area of the first network.

13. The method according to claim 11 or 12, wherein the method further comprises:
sending, by the first network device, third indication information to the at least one terminal device, wherein the third indication information indicates the at least one terminal device to report the ephemeris information.

14. The method according to any one of claims 11 to 13, wherein the at least one terminal device comprises the first terminal device.

15. A communication apparatus, comprising a function module configured to implement the method according to any one of claims 1 to 14.

16. A communication apparatus, comprising a memory and a processor, wherein
the memory is configured to store program instructions; and
the processor is configured to execute the program instructions in the memory to implement the method according to any one of claims 1 to 14.

17. A computer-readable storage medium, wherein the computer-readable storage medium stores program code executed by a computer, and the program code comprises instructions for implementing the method according to any one of claims 1 to 14.

18. A computer program product, wherein the computer program product comprises instructions for implementing the communication method according to any one of claims 1 to 14.

19. A communication system, wherein the communication system comprises an apparatus configured to perform the communication method according to any one of claims 1 to 14.
